# FASCICULE DE BREVET EUROPEEN

(11) **EP 1 671 811 B1**
(45) Date de publication et mention de la délivrance du brevet: **17.02.2010**
(21) Numéro de dépôt: 05292584.9
(22) Date de dépôt: 06.12.2005
(51) Int. Cl.: B60B 25/02

(54) **Roue allégée en particulier pour machines agricoles**
Leichtrad insbesondere für landwirtschaftliche Maschinen
Light wheel in particular for agricultural machines

(30) Priorité: 14.12.2004 FR 0413270
(43) Date de publication de la demande: 21.06.2006
(73) Titulaire: OTICO, 77650 Longueville (FR)
(72) Inventeur: Phely, Olivier, 77520 Thenisy (FR)
(74) Mandataire: Bezault, Jean

(56) Documents cités:
- WO-A-95/03183
- US-A- 1 335 496
- PATENT ABSTRACTS OF JAPAN vol. 2003, no. 02, 5 février 2003 (2003-02-05) & JP 2002 316504 A (OHTSU TIRE & RUBBER CO LTD :THE), 29 octobre 2002 (2002-10-29)
- PATENT ABSTRACTS OF JAPAN vol. 2000, no. 12, 3 janvier 2001 (2001-01-03) & JP 2000 255201 A (OHTSU TIRE & RUBBER CO LTD :THE), 19 septembre 2000 (2000-09-19)

## Description

L'invention se rapporte au domaine des roues et elle concerne plus particulièrement une roue comprenant un corps de roue avec une jante délimitant une gorge, ainsi qu'un pneumatique propre à être reçu dans la gorge de la jante.

On connaît déjà de nombreuses roues de ce genre, dans lesquelles le corps de roue et le pneumatique peuvent se présenter sous différentes formes en fonction des applications particulières auxquelles ces roues sont destinées.

L'invention vise plus particulièrement, mais non limitativement, les roues destinées aux machines agricoles, c'est à dire des roues qui sont conçues essentiellement pour rouler sur des terrains plus ou moins meubles et à de faibles vitesses, typiquement inférieures à 40 km/heure. De telles roues peuvent être utilisées par exemple pour supporter des outils de travail du sol, animés ou non, et traînés par un tracteur. Ces roues ont souvent une fonction de rappuyage du sol et elles peuvent contribuer aussi à former des sillons dans le sol.

Même si ces roues sont destinées à circuler à faible vitesse, elles subissent néanmoins des efforts importants, notamment lorsqu'elles roulent sur des terrains accidentés, par exemple en dévers, ou lorsqu'elles doivent subir des changements de direction brusques, par exemple à l'occasion d'un demi-tour. C'est la raison pour laquelle elles doivent pouvoir résister à des contraintes particulièrement élevées.

Les pneumatiques qui équipent ces roues peuvent également appartenir à différents types. Il peut s'agir de pneumatiques gonflés, pleins, ou encore "semi-creux", c'est à dire de pneumatiques dont l'enveloppe délimite un volume interne non gonflé qui communique avec le milieu ambiant par au moins une ouverture de l'enveloppe.

Dans toutes les réalisations connues de roues de ce genre, la jante, qui constitue la périphérie du corps de roue, est une pièce circulaire continue qui délimite une gorge continue pour la réception du pneumatique.

WO 95/03183A (AIRBOSS LIM.) décrit une roue à plusieurs segments de jante.

Dans le domaine particulier des machines agricoles, les corps de roue sont souvent réalisés en acier ou en fonte et possèdent donc un poids relativement élevé, ce qui entraîne un coût de matière plus important, mais aussi des phénomènes d'inertie lorsque la roue circule sur un terrain.

L'invention a notamment pour but de surmonter les inconvénients précités.

Elle vise plus particulièrement à procurer une roue du type défini en introduction qui possède une structure allégée afin de diminuer le poids de matière et le coût de fabrication, tout en offrant une résistance mécanique élevée.

L'invention vise aussi à réaliser une roue de ce type qui convient tout particulièrement dans le domaine des machines agricoles.

Elle vise encore à procurer une telle roue qui est susceptible d'être réalisée avec une large gamme de formes et de dimensions.

L'invention propose à cet effet une roue du type défini en introduction, dans laquelle la jante est interrompue pour constituer une pluralité de segments de jante en forme d'arc de cercle, mutuellement espacés, et délimitant des portions de gorge respectives, et dans laquelle le pneumatique comporte un talon propre à être reçu dans les portions de gorge des segments de jante et incorpore au moins un renfort annulaire agencé pour contraindre le talon dans les portions de gorge.

Ainsi, la roue de l'invention se démarque fondamentalement des roues connues par le fait que la jante est interrompue pour former une pluralité de segments de jante en arc de cercle qui délimitent conjointement une gorge interrompue. Ce corps de roue de structure particulière reçoit un pneumatique spécialement conçu à cet effet qui comporte un talon propre à être reçu dans les portions de gorge des segments de jante. Pour permettre un bon maintien du talon, le pneumatique de l'invention incorpore au moins un renfort annulaire, c'est à dire un insert, agencé pour contraindre le talon dans les portions de gorge, même lorsque la roue est soumise à des contraintes particulièrement élevées, par exemple lorsqu'elle circule dans des terrains difficiles.

Dans une première forme de réalisation de l'invention, chaque segment de jante comporte une paroi de fond et deux parois latérales qui sont réalisées d'une seule pièce avec le corps de roue.

Dans une deuxième forme de réalisation de l'invention, chaque segment de jante comporte une paroi de fond qui est réalisée d'une seule pièce avec un corps de roue et deux parois latérales, dont l'une au moins est réalisée sous la forme d'une joue démontable.

Les segments de jante sont de préférence solidaires de bras radiaux respectifs qui sont issus d'un moyeu de roue. On peut cependant prévoir, en variante, que les segments de jante soient solidaires d'un flasque ou disque commun qui comporte un moyeu de roue.

Les segments de jante peuvent être réalisés en une matière métallique, par exemple en fonte, ou bien encore en une matière plastique ou composite.

Dans une forme de réalisation préférée de l'invention, le pneumatique est un pneumatique du type "semi-creux" comportant une enveloppe délimitant un volume interne non gonflé communiquant avec le milieu ambiant par au moins une ouverture de l'enveloppe.

Les portions de gorge ont de préférence une forme en U avec une section transversale sensiblement rectangulaire, le talon du pneumatique étant réalisé plein.

Dans une forme de réalisation, le talon du pneumatique présente un profil constant, complémentaire du profil des portions de gorge.

Dans une autre forme de réalisation, le talon du pneumatique présente un profil variable, avec un premier profil pour de premières parties du talon reçues dans les portions de gorge, et un second profil pour de secondes parties du talon non reçues dans les portions de gorge, le premier profil étant complémentaire du profil des portions de gorge et le second profil étant élargi par rapport au premier profil dans au moins une dimension.

Le ou chaque renfort annulaire peut être, par exemple, formé de fils enroulés maintenus par un caoutchouc d'adhérence, ou encore formés d'un élément monobloc.

Le ou chaque renfort annulaire est avantageusement noyé dans le pneumatique à proximité du talon.

De préférence, le pneumatique comporte deux renforts annulaires disposés symétriquement par rapport à un plan de symétrie du pneumatique qui passe par le talon.

Dans la description qui suit, faite seulement à titre d'exemple, on se réfère aux dessins annexés, sur lesquels :
- la figure 1 est une vue de face d'une roue selon une première forme de réalisation de l'invention ;
- la figure 2 est une vue partielle en coupe, à échelle agrandie, suivant la ligne II-II de la figure 1 ;
- la figure 3 est une vue de face du corps de la roue de la figure 1 ;
- la figure 4 est une vue en coupe suivant la ligne IV-IV de la figure 3 ;
- la figure 5 représente le détail V de la figure 4, à échelle agrandie ;
- la figure 6 est une vue de face d'une roue selon une deuxième forme de réalisation de l'invention ;
- la figure 7 est une vue arrière de la roue de la figure 6 ;
- la figure 8 est une vue en coupe partielle, à échelle agrandie, selon la ligne VIII-VIII de la figure 6 ;
- la figure 9 est vue partielle de face d'un pneumatique comportant un talon à profil variable ; et
- la figure 10 est une vue de face d'un corps de roue selon une troisième forme de réalisation de l'invention.

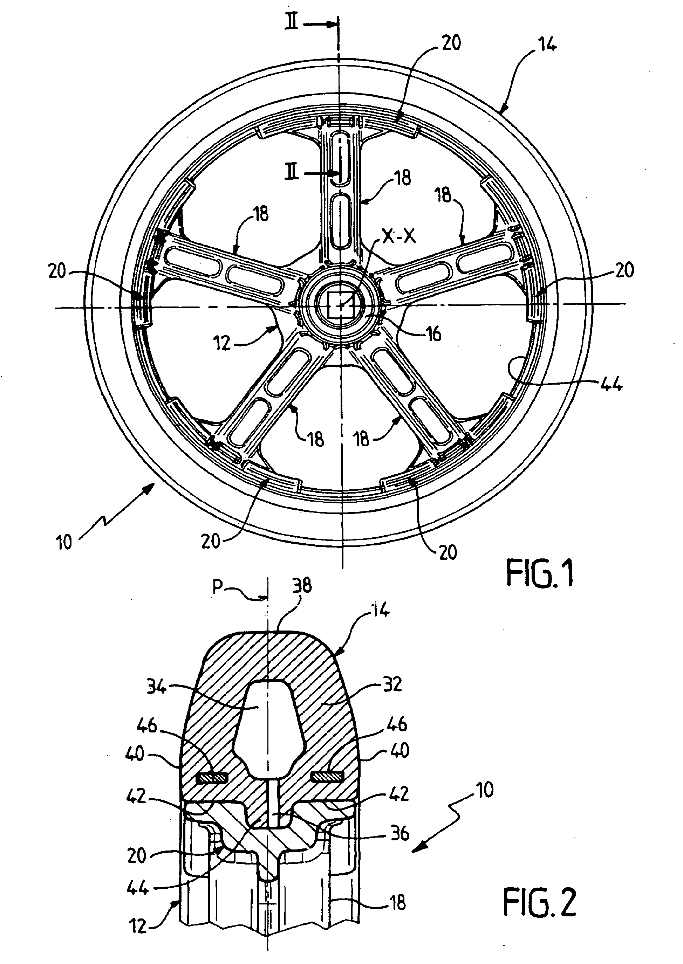

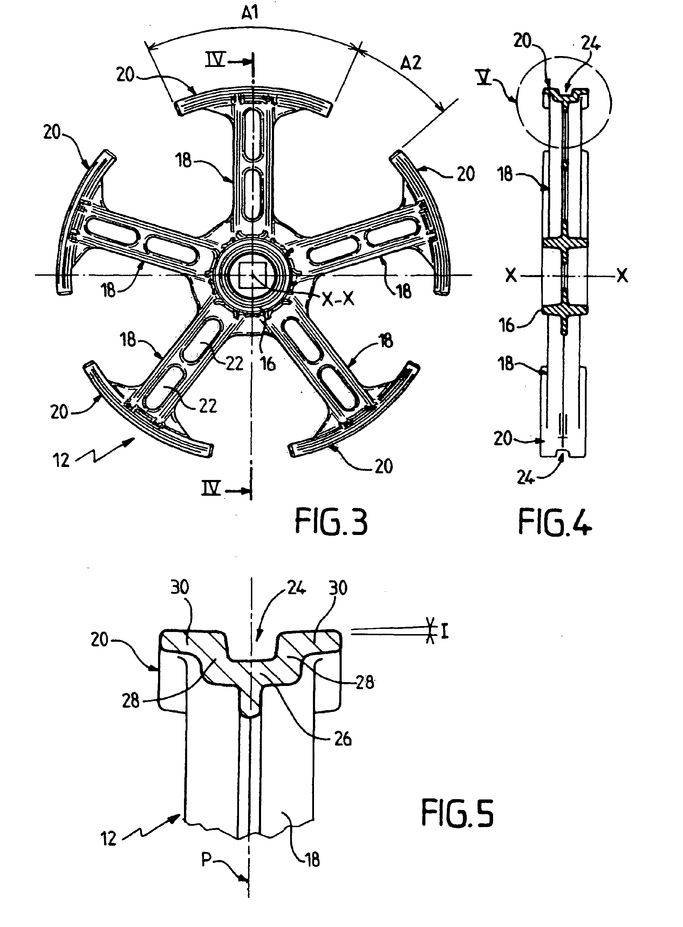

On se réfère d'abord à la figure 1 qui représente une roue 10 comprenant un corps de roue 12 sur lequel est monté un pneumatique 14. Le corps de roue 12, qui est aussi représenté seul sur la figure 3, est réalisé d'une seule pièce par moulage. Dans l'exemple, le corps de roue est réalisé en fonte, mais il pourrait être réalisé en d'autres matières, par exemple métalliques ou encore plastiques ou composites.

Le corps de roue 12 comporte un moyeu de roue 16 à partir duquel sont issus des bras radiaux 18 qui sont au nombre de cinq dans l'exemple, en formant deux à deux un angle de 72°. Ces bras 18 sont solidaires de segments de jante respectifs 20 ayant chacun la forme d'un arc de cercle correspondant à un angle A1 et espacés deux à deux d'un intervalle angulaire A2, ce qui permet de réaliser une jante interrompue au lieu d'une jante classique continue. Dans l'exemple, chaque angle A1 est de 48° et chaque angle A2 de 24°, si bien que la somme des intervalles angulaires des segments de jante 20 est égale à 240°, ce qui correspond aux deux tiers d'une circonférence complète.

Il en résulte que le corps de roue 12 présente une structure allégée par rapport à un corps de roue possédant une jante continue, cette structure étant également allégée par le fait que les bras 18 ont chacun deux évidements 22.

Chaque segment de jante 20 délimite une portion de gorge 24 qui a ici la forme d'un U comme on le voit sur la coupe de la figure 4 et sur la vue agrandie de la figure 5. Sur la coupe de la figure 5, on voit également que chaque segment de jante 20 possède une paroi de fond 26 et deux parois latérales 28 qui se prolongent vers l'extérieur par deux parois d'extrémité 30. Les deux parois 30 sont inclinées en direction de la portion de gorge 24 suivant un angle I, par exemple de 5', par rapport à l'axe XX de la roue. Le corps de roue admet lui-même un plan de symétrie P qui est perpendiculaire à l'axe XX et qui passe au milieu de la portion de gorge 24 (figure 5).

Le pneumatique 14 (figures 1 et 2) est dans l'exemple du type semi-creux. Il comporte une enveloppe 32 (figure 2) délimitant un volume interne 34 non gonflé qui communique avec le milieu ambiant par au moins une ouverture 36 qui traverse l'épaisseur de l'enveloppe 32. Le pneumatique 14 possède un profil en dôme délimité par une bande de roulement 38 reliée à deux flancs 40 donc chacun est relié perpendiculairement à une face interne 42. Les faces internes 42 sont réunies mutuellement par un talon 44 réalisé sous la forme d'un bourrelet faisant saillie vers l'intérieur du pneumatique. Le pneumatique présente ici une section transversale admettant une symétrie par rapport au plan P de la jante.

Le talon 44 est réalisé plein et il possède un profil adapté à celui des portions de gorge 24. Ainsi, le talon 44 vient s'engager dans les portions de gorge 24, tandis que les faces internes 42 viennent s'appuyer contre les parois d'extrémité 30 des segments de jante. L'ouverture 36 est constituée ici par un passage radial qui traverse l'enveloppe 32 dans la région du talon 44. Dans l'exemple de réalisation, le talon 44 présente un profil constant, de section transversale rectangulaire, qui est complémentaire du profil des portions de gorge.

Comme on le voit sur la figure 2, le pneumatique incorpore deux renforts annulaires 46, noyés dans la matière du pneumatique, à proximité du talon 44 et de façon symétrique par rapport au plan P. Autrement dit, chacun des renforts 46 se trouve placé dans chacune des deux régions de l'enveloppe délimitées par un flanc 40 et une face interne 42. Ces renforts annulaires sont conçus pour contraindre le talon 44 dans les portions de gorge 24. Ces renforts annulaires, que l'on peut aussi appeler des inserts, peuvent être réalisés suivant différentes techniques en elles-mêmes connues pour assurer le renfort de pneumatiques. Il peut s'agir par exemple de fils enroulés sur plusieurs tours et maintenus mutuellement par un caoutchouc d'adhérence, ou encore d'un élément monobloc, par exemple d'un anneau plat en matière métallique ou plastique. Il est avantageux dans tous les cas de choisir un matériau qui favorise l'adhérence de la matière élastomère dont est formé le pneumatique 14.

Le pneumatique 14 peut être réalisé suivant des techniques en elles-mêmes connues pour la fabrication de pneumatique du type semi-creux. On préfère tout particulièrement réaliser un tronçon extrudé dont les extrémités sont ensuite réunies pour former une structure annulaire qui est placée dans un moule. Toutefois, le pneumatique peut être réalisé d'une autre façon, par exemple sous la forme d'un pneumatique plein. Egalement, le profil du pneumatique peut varier en fonction des applications souhaitées. Dans l'exemple, la forme spécifique du profil permet de former un sillon dans un sol préalablement ameubli pour y déposer des graines ou semences. Le pneumatique peut aussi rouler sur un sol dur, par exemple sur route, mais à de faibles vitesses, par exemple inférieures à 40 km/h.

Pour placer le pneumatique autour des segments de jante, il faut comprimer le talon dans la direction radiale extérieure pour élargir son diamètre. Il est commode pour cela d'utiliser un élargisseur (non représenté) réalisé sous la forme d'une pièce tronconique que l'on place au-dessus du corps de roue disposé à plat. Le pneumatique est placé autour de cet élargisseur et est déplacé dans la direction axiale pour provoquer une augmentation progressive de son diamètre jusqu'à ce que le talon se présente dans les portions de gorge des segments de jante et puisse alors se rétracter pour venir se loger dans les portions de gorge. L'écartement du talon dans la direction radiale extérieure est en outre favorisé par le fait que le pneumatique est réalisé semi-creux.

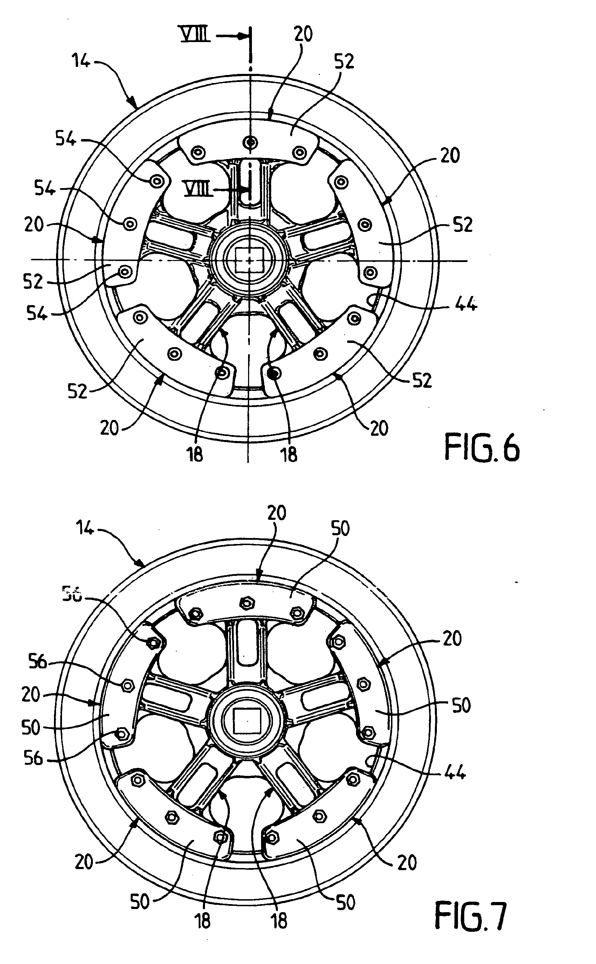

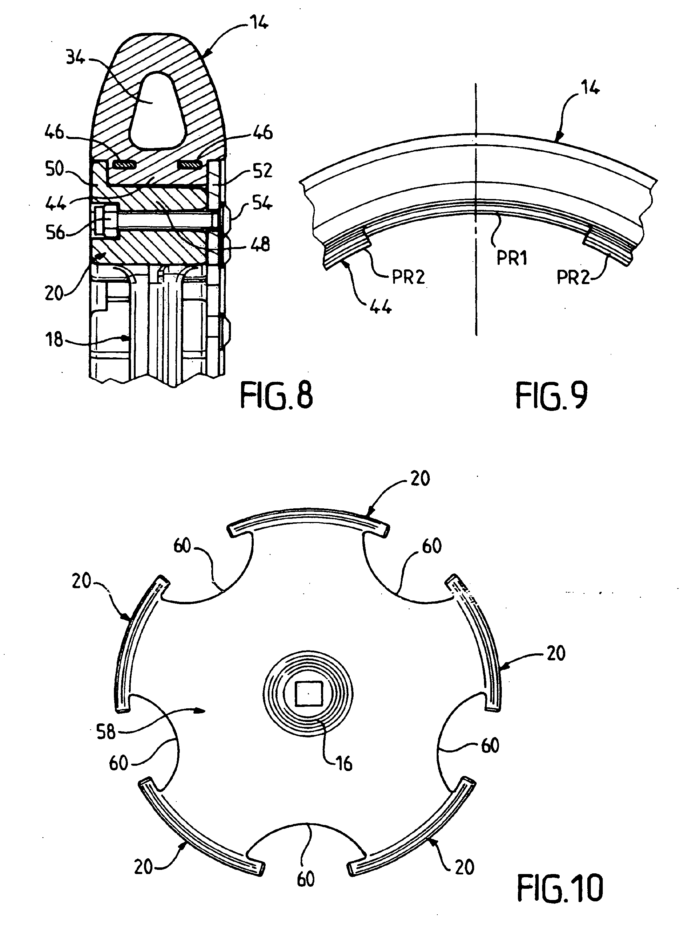

On se réfère maintenant aux figures 6 à 8 qui montrent une deuxième forme de réalisation d'une roue selon l'invention. Le corps de roue reprend la structure principale du corps de roue de la forme de réalisation précédente, sauf que chaque segment de jante est réalisé en deux parties, à savoir une partie monobloc avec le corps de roue et une partie démontable. Plus particulièrement, chaque segment de jante 20 comporte (figure 8) une paroi de fond 48 qui est monobloc avec le corps de la roue et avec une paroi latérale 50. L'autre paroi latérale 52 est réalisée sous la forme d'une joue démontable. On aperçoit sur la vue de face de la figure 6 les cinq joues démontables 52 et sur la vue arrière de la figure 7 les cinq parois latérales 50 qui sont monobloc avec le corps de roue.

Le montage de chacune des joues s'effectue à chaque fois avec trois vis 54 (figure 6) qui traversent le corps de roue dans la direction axiale et qui reçoivent chacune un écrou hexagonal 56 dont chacun est enchâssé dans la paroi latérale 50 correspondante. Le montage par l'ensemble vis/écrou apparaît également sur la coupe de la figure 8. Comme on le voit également sur cette coupe, le talon 44 est beaucoup plus large que dans le cas de la première forme de réalisation et les deux renforts annulaires 46 sont placés ici dans la région du talon.

Dans cette forme de réalisation, le montage du pneumatique s'effectue sur le corps de roue dont les joues 52 ont été préalablement démontées, sans qu'il soit nécessaire d'agrandir le diamètre du talon comme dans la forme de réalisation précédente. Une fois le talon correctement mis en place, les cinq joues 52 sont vissées sur le corps de roue. Dans une variante de réalisation, non représentée, chaque segment de jante pourrait comporter deux joues démontables disposées respectivement des deux côtés du corps de roue.

Dans les deux formes de réalisation précédentes, le talon possède un profil constant adapté à chaque fois au profil des portions de gorge 24. Il est envisageable aussi, comme on le voit sur la figure 9, de prévoir un talon 44 à profil variable avec un premier profil PR1 pour de premières parties du talon reçues dans les portions de gorge 24 et un second profil PR2 pour de secondes parties du talon non reçues dans les portions de gorge. Le premier profil PR1 est complémentaire du profil des portions de gorge, tandis que le second profil PR2 est élargi par rapport au premier profil PR1, dans au moins une dimension. On assure ainsi un blocage en rotation du pneumatique par rapport au corps de roue. Il est avantageux également que le second profil PR2 corresponde sensiblement au profil des sections de jante, ce qui permet d'empêcher l'introduction de corps étrangers dans l'espace compris entre le talon et les portions de gorge.

Dans les formes de réalisation précédentes, le corps de roue comporte des bras radiaux 18 qui sont au nombre de cinq dans l'exemple représenté. Il est possible bien entendu de faire varier le nombre des bras radiaux et le nombre des segments de jante. Il est envisageable aussi, comme montré à la figure 9, que les segments de jante 20 soient solidaires d'un flasque ou disque commun 58 qui comporte également un moyeu de roue 16. Le flasque ou disque commun 58 comporte ici des évidements 60, dont chacun est formé entre deux segments de jante 20 successifs et est limité par un bord en arc de cercle. La structure évidée ainsi obtenue contribue à alléger davantage le corps de roue.

La roue, selon l'invention, est susceptible de nombreuses variantes de réalisation quant à la structure du corps de roue et à celle du pneumatique. Elle peut également être réalisée avec des dimensions très différentes. Dans le cas d'une application à des machines agricoles, le diamètre total de la roue (tel que délimité par la bande de roulement du pneumatique), pourra par exemple se situer entre 400 et 800 mm, cette gamme de dimensions n'étant pas limitative.

Le corps de roue peut être obtenu par moulage sans qu'il soit nécessaire de procéder ensuite à un usinage des sections de jante.

L'invention trouve une application préférentielle aux machines agricoles.

## Revendications

1. Roue, en particulier pour machine agricole, comprenant un corps de roue avec une jante délimitant une gorge, ainsi qu'un pneumatique propre à être reçu dans la gorge de la jante, **caractérisé en ce que** la jante est interrompue pour constituer une pluralité de segments de jante (20) en forme d'arc de cercle, mutuellement espacés et délimitant des portions de gorge (24) respectives, et **en ce que** le pneumatique (14) comporte un talon (44) propre à être reçu dans les portions de gorge (24) des segments de jante (20) et incorpore au moins un renfort annulaire (46) agencé pour contraindre le talon (44) dans les portions de gorge (24).

2. Roue selon la revendication 1, **caractérisée en ce que** chaque segment de jante (20) comporte une paroi de fond (26) et deux parois latérales (28) qui sont réalisées d'une seule pièce avec le corps de roue (12).

3. Roue selon la revendication 1, **caractérisée en ce que** chaque segment de jante (20) comporte une paroi de fond (48) qui est réalisée d'une seule pièce avec le corps de roue (12) et deux parois latérales (50, 52) dont l'une au moins est réalisée sous la forme d'une joue démontable (52).

4. Roue selon l'une des revendications 1 à 3, **caractérisée en ce que** les segments de jante (20) sont solidaires de bras radiaux respectifs (18) qui sont issus d'un moyeu de roue (16).

5. Roue selon l'une des revendications 1 à 3, **caractérisée en ce que** les segments de jante (20) sont solidaires d'un flasque ou disque commun (58) qui comporte un moyeu de roue (16).

6. Roue selon l'une des revendications 1 à 5, **caractérisée en ce que** les segments de jante (20) sont réalisés en une matière métallique, par exemple en fonte.

7. Roue selon l'une des revendications 1 à 6, **caractérisée en ce que** les segments de jante (20) sont réalisés en une matière plastique ou composite.

8. Roue selon l'une des revendications 1 à 7, **caractérisée en ce que** le pneumatique (14) est du type semi-creux et comporte une enveloppe (32) délimitant un volume interne non gonflé (34) communiquant avec le milieu ambiant par au moins une ouverture (36) de l'enveloppe.

9. Roue selon l'une des revendications 1 à 8, **caractérisée en ce que** les portions de gorge (24) ont une forme en U avec un section transversale sensiblement rectangulaire, et **en ce que** le talon (44) du pneumatique (14) est réalisé plein.

10. Roue selon l'une des revendications 1 à 9, **caractérisée en ce que** le talon (44) du pneumatique (14) présente un profil constant, complémentaire du profil des portions de gorge (24).

11. Roue selon l'une des revendications 1 à 9, **caractérisée en ce que** le talon (44) du pneumatique (14) présente un profil variable, avec un premier profil (PR1) pour de premières parties du talon reçues dans les portions de gorge (24) et un second profil (PR2) pour de secondes parties du talon non reçues dans les portions de gorge, le premier profil (PR1) étant complémentaire du profil des portions de gorge (24) et le second profil (PR2) étant élargi par rapport au premier profil (PR1), dans au moins une dimension.

12. Roue selon l'une des revendications 1 à 11, **caractérisée en ce que** le ou chaque renfort annulaire (46) est formé de fils enroulés maintenus par un caoutchouc d'adhérence.

13. Roue selon l'une des revendications 1 à 12, **caractérisée en ce que** le ou chaque renfort annulaire (46) est formé d'un élément monobloc.

14. Roue selon l'une des revendications 1 à 13, **caractérisée en ce que** le ou chaque renfort annulaire (46) est noyé dans le pneumatique à proximité du talon (44).

15. Roue selon l'une des revendications 1 à 14, **caractérisée en ce que** le pneumatique (14) comporte deux renforts annulaires (46) disposés symétriquement par rapport à un plan de symétrie (P) du pneumatique, qui passe par le talon (44).

## Claims

1. Wheel, particularly for an agricultural machine, comprising a wheel body with a rim delimiting a groove, and a tyre adapted to be accommodated in the groove of the rim, **characterised in that** the rim is interrupted so as to form a plurality of rim segments (20) in the form of arcs of a circle, spaced from one another and delimiting respective groove portions (24), and **in that** the tyre (14) has a bead (44) adapted to be accommodated in the groove portions (24) of the rim segments (20) and incorporates at least one annular reinforcement (46) arranged to stress the bead (44) in the groove portions (24).

2. Wheel according to claim 1, **characterised in that** each rim segment (20) comprises a base wall (26) and two side walls (28) which are formed in one piece with the wheel body (12).

3. Wheel according to claim 1, **characterised in that** each rim segment (20) comprises a base wall (48) that is formed in one piece with the wheel body (12), and two side walls (50, 52) at least one of which is made in the form of a demountable cheek (52).

4. Wheel according to one of claims 1 to 3, **characterised in that** the rim segments (20) are fixedly attached to respective radial arms (18) which start from a wheel hub (16).

5. Wheel according to one of claims 1 to 3, **characterised in that** the rim segments (20) are fixedly attached to a common flange or disc (58) which comprises a wheel hub (16).

6. Wheel according to one of claims 1 to 5, **characterised in that** the rim segments (20) are made of a metallic material, for example cast iron.

7. Wheel according to one of claims 1 to 6, **characterised in that** the rim segments (20) are made of a plastic or composite material.

8. Wheel according to one of claims 1 to 7, **characterised in that** the tyre (14) is of the semi-hollow type and comprises a cover (32) that defines an uninflated internal volume (34) communicating with the ambient medium via at least one opening (36) in the cover.

9. Wheel according to one of claims 1 to 8, **characterised in that** the groove portions (24) are U-shaped with a substantially rectangular cross-section, and **in that** the bead (44) of the tyre (14) is of solid construction.

10. Wheel according to one of claims 1 to 9, **characterised in that** the bead (44) of the tyre (14) has a constant profile which is complementary to the profile of the groove portions (24).

11. Wheel according to one of claims 1 to 9, **characterised in that** the bead (44) of the tyre (14) has a variable profile, with a first profile (PR1) for first parts of the bead accommodated in the groove portions (24) and a second profile (PR2) for second parts of the bead that are not accommodated in the groove portions, the first profile (PR1) being complementary to the profile of the groove portions (24) and the second profile (PR2) being widened relative to the first profile (PR1), in at least one dimension.

12. Wheel according to one of claims 1 to 11, **characterised in that** the or each annular reinforcement (46) is formed by coiled wires held by rubber adhering thereto.

13. Wheel according to one of claims 1 to 12, **characterised in that** the or each annular reinforcement (46) is formed by an element cast in one piece.

14. Wheel according to one of claims 1 to 13, **characterised in that** the or each annular reinforcement (46) is embedded in the tyre close to the bead (44).

15. Wheel according to one of claims 1 to 14, **characterised in that** the tyre (14) comprises two annular reinforcements (46) arranged symmetrically relative to a plane of symmetry (P) of the tyre which passes through the bead (44).

## Patentansprüche

1. Rad, insbesondere für landwirtschaftliche Maschinen, mit einem Radkörper mit einer Felge, die eine Nut begrenzt, sowie einem Luftreifen, der geeignet ist, in der Nut der Felge aufgenommen zu werden, **dadurch gekennzeichnet, dass** die Felge unterbrochen ist, um eine Mehrzahl von Felgensegmenten (20) in Form eines Kreisbogens zu bilden, die untereinander beabstandet sind, und entsprechende Nutabschnitte (24) begrenzen, und dass der Luftreifen (14) einen Absatz (44) aufweist, der geeignet ist, in den Nutenabschnitten (24) der Felgensegmente (20) aufgenommen zu werden und wenigstens eine ringförmige Verstärkung (46) mit einschließt, die vorgesehen ist, um den Absatz (44) in die Nutabschnitte (24) hinein zu zwingen.

2. Rad nach Anspruch 1, **dadurch gekennzeichnet, dass** jedes Felgensegment (20) eine Bodenwand (26) und zwei Seitenwände (28) aufweist, die aus einem einzigen Teil zusammen mit dem Radkörper (12) gebildet sind.

3. Rad nach Anspruch 1, **dadurch gekennzeichnet, dass** jedes Felgensegment (20) eine Bodenwand (48), die aus einem einzigen Teil zusammen mit dem Radkörper (20) gebildet ist, und zwei Seitenwände (50, 52) aufweist, von denen wenigstens eine in Form einer entfernbaren Wange (52) ausgebildet ist.

4. Rad nach einem der Ansprüche 1 bis 3, **dadurch gekennzeichnet, dass** die Felgensegmente (20) mit entsprechenden Radialarmen (18) verbunden sind, die von einer Radnabe (16) ausgehen.

5. Rad nach einem der Ansprüche 1 bis 3, **dadurch gekennzeichnet, dass** die Felgensegmente (20) mit einem gemeinsamen Flansch oder einer gemeinsamen Scheibe (58) verbunden sind, die eine Radnabe (16) aufweist.

6. Rad nach einem der Ansprüche 1 bis 5, **dadurch gekennzeichnet, dass** die Felgensegmente (20) aus einem metallischen Material, beispielsweise aus Guss, gebildet sind.

7. Rad nach einem der Ansprüche 1 bis 6, **dadurch gekennzeichnet, dass** die Felgensegmente (20) aus einem Kunststoffmaterial oder einem Verbundmaterial gebildet sind.

8. Rad nach einem der Ansprüche 1 bis 7, **dadurch gekennzeichnet, dass** der Luftreifen (14) vom halb-hohlen Typ ist und eine Hülle (32) aufweist, die ein Inneres nicht aufgeblasenes Volumen (34) begrenzt, das mit der Umgebung über wenigstens eine Öffnung (36) der Hülle in Verbindung steht.

9. Rad nach einem der Ansprüche 1 bis 8, **dadurch gekennzeichnet, dass** die Nutabschnitte (24) eine U-Form haben, mit einem im Wesentlichen rechteckigen Querschnitt, und dass der Absatz (44) des Luftreifens (14) voll ausgebildet ist.

10. Rad nach einem der Ansprüche 1 bis 9, **dadurch gekennzeichnet, dass** der Absatz (44) des Luftreifens (14) ein konstantes Profil aufweist, das komplementär zum Profil der Nutabschnitte (24) ist.

11. Rad nach einem der Ansprüche 1 bis 9, **dadurch gekennzeichnet, dass** der Absatz (44) des Luftreifens (14) ein variables Profil aufweist, mit einem ersten Profil (PR1) für erste Abschnitte des Absatzes, die in den Nutabschnitt (24) aufgenommen sind, und mit einem zweiten Profil (PR2) für zweite Abschnitte des Absatzes, die nicht in dem Nutabschnitt aufgenommen sind, weil das erste Profil (PR1) zum Profil der Nutabschnitte (24) komplementär und das zweite Profil (PR2) in wenigstens einer Richtung bezüglich des ersten Profils (PR1) vergrößert ist.

12. Rad nach einem der Ansprüche 1 bis 11, **dadurch gekennzeichnet, dass** die oder jede ringförmige Verstärkung (46) aus gerollten Fäden gebildet ist, die durch einen Haftungsgummi gehalten werden.

13. Rad nach einem der Ansprüche 1 bis 12, **dadurch gekennzeichnet, dass** die oder jede ringförmige Verstärkung (46) aus einem einstückigen Element gebildet ist.

14. Rad nach einem der Ansprüche 1 bis 13, **dadurch gekennzeichnet, dass** die oder jede ringförmige Verstärkung (46) in den Luftreifen in der Nähe des Absatzes (44) eingebettet ist.

15. Rad nach einem der Ansprüche 1 bis 14, **dadurch gekennzeichnet, dass** der Luftreifen (14) zwei ringförmige Verstärkungen (46) aufweist, die symmetrisch bezüglich einer Symmetrieebene (P) des Luftreifens angeordnet sind, die durch den Absatz (44) hindurch geht.
